# DEMANDE DE BREVET EUROPEEN

(11) **EP 4 366 272 A1**
(43) Date de publication de la demande: **08.05.2024**
(21) Numéro de dépôt: 23206149.9
(22) Date de dépôt: 26.10.2023
(51) Int. Cl.: H04L 65/1059, H04L 65/403, H04M 3/22

(54) **PROCÉDÉ D ENVOI D'UN FLUX AUDIO D'UN TERMINAL PARTICIPANT À UNE SESSION DE CONFÉRENCE IMPLIQUANT UNE PLURALITÉ D AUTRES TERMINAUX TIERS**

(30) Priorité: 04.11.2022 FR 2211518
(71) Demandeur: Streamwide, 75010 Paris (FR)
(72) Inventeur: PREVITALI, Florent, 94100 SAINT MAUR DES FOSSES (FR)
(74) Mandataire: Plasseraud IP

(57) **Abrégé**

Des exemples présentent un procédé, mis en oeuvre par un terminal, d'envoi d'un flux audio depuis ledit terminal participant à une session de conférence à laquelle participe en outre une pluralité de terminaux tiers ;
dans lequel les paquets de données des flux audios émis par ledit terminal et lesdits terminaux tiers sont encapsulés selon un protocole internet, et dans lequel un flux audio émis par chacun dudit terminal et desdits terminaux tiers est envoyé à un serveur de session qui distribue le flux audio aux autres terminaux participant à la conférence,
le procédé comprenant :
déterminer au moins un paramètre audio du flux audio acquis par ledit terminal,
envoyer ou ne pas envoyer le flux audio au serveur de session en fonction d'une valeur de l'au moins un paramètre audio.

## Description

### Domaine technique

La présente divulgation relève du domaine des échanges de données transitant par des réseaux utilisant des protocoles internet dans le cadre de conférences de type audio et/ou vidéo.

### Technique antérieure

Les échanges de données transitant par des réseaux utilisant des protocoles internet sont largement répandus dans le cadre de conférences audio et/ou vidéo entre des participants distants. Notamment, plusieurs applications permettent de tenir des conférences incluant de nombreux participants, lesquels se connectent et participent à la conférence via un dispositif électronique adapté, ou terminal.

Une conférence audio et/ou vidéo entre plusieurs participants est généralement gérée, du point de vue de la bande passante et des différents flux de données audios/vidéos à traiter et à transmettre aux différents participants, par un serveur de session qui centralise l'ensemble des traitements et des transmissions des flux de données.

La gestion des conférences et le traitement des flux vidéo et audio demandent beaucoup de ressources de calcul au processeur du serveur de session. Les ressources nécessaires sont d'autant plus importantes que le nombre de participants est élevé.

La présente divulgation vient améliorer cette situation.

### Résumé

A cet égard, il est proposé un procédé, mis en oeuvre par un terminal, d'envoi d'un flux audio depuis ledit terminal participant à une session de conférence à laquelle participe en outre une pluralité de terminaux tiers ;
dans lequel les paquets de données des flux audios émis par ledit terminal et lesdits terminaux tiers sont encapsulés selon un protocole internet, et dans lequel un flux audio émis par chacun dudit terminal et desdits terminaux tiers est envoyé à un serveur de session qui distribue le flux audio aux autres terminaux participant à la conférence, le procédé comprenant :
déterminer au moins un paramètre audio du flux audio acquis par ledit terminal,
envoyer ou ne pas envoyer le flux audio au serveur de session en fonction d'une valeur de l'au moins un paramètre audio.

Optionnellement, l'un au moins du au moins un paramètre audio correspond à un volume sonore du flux audio acquis par le terminal, et dans lequel le flux audio est envoyé au serveur de session seulement lorsque le volume sonore du flux audio acquis est supérieur à un seuil de volume sonore déterminé.

Optionnellement, le flux audio est envoyé au serveur de session et le procédé comprend en outre une transmission d'une valeur du volume sonore du flux audio.

Optionnellement, le procédé comprend en outre une réception d'une valeur du volume sonore du flux audio reçu du serveur de session, et le seuil de volume sonore est déterminé comme étant égal à la valeur du volume sonore reçu du serveur de session.

Optionnellement, l'un au moins du au moins un paramètre audio correspond à une fréquence du flux audio acquis par ledit terminal, et dans lequel le flux audio est envoyé au serveur de session seulement lorsque le flux audio contient une fréquence comprise dans une plage de fréquences prédéterminée.

Optionnellement, la plage de fréquences prédéterminée correspond à une plage de fréquences de la voix humaine.

Optionnellement, la plage de fréquences prédéterminée s'étend de 30 à 3000 Hz.

Le procédé selon la présente divulgation permet donc d'économiser des ressources de calcul du serveur de session 3 assurant la distribution des flux de données de la session de conférence en utilisant astucieusement les ressources de calcul du terminal pour opérer une discrimination des flux audios en amont des échanges de données entre terminal et serveur. De cette façon, le serveur de session n'a pas à décoder, éventuellement déchiffrer, l'ensemble des flux audios acquis par les terminaux en temps réel. Le filtrage, c'est-à-dire la sélection des flux, est mis en oeuvre au moins en partie au niveau des terminaux émetteurs.

La demande porte également sur un terminal configuré pour mettre en oeuvre l'un quelconque des procédés présentés par la présente divulgation.

La demande porte en outre sur un produit programme d'ordinateur comportant des instructions pour la mise en oeuvre de l'un quelconque des procédés présentés par la présente divulgation lorsque ce programme est exécuté par un processeur.

Enfin, la demande porte sur un support d'enregistrement non transitoire lisible par un ordinateur sur lequel est enregistré un programme pour la mise en oeuvre de l'un quelconque des procédés présentés par la présente divulgation lorsque ce programme est exécuté par un processeur.

### Brève description des dessins

D'autres caractéristiques, détails et avantages apparaîtront à la lecture de la description détaillée ci-après, et à l'analyse des dessins annexés, sur lesquels :
**Fig. 1**

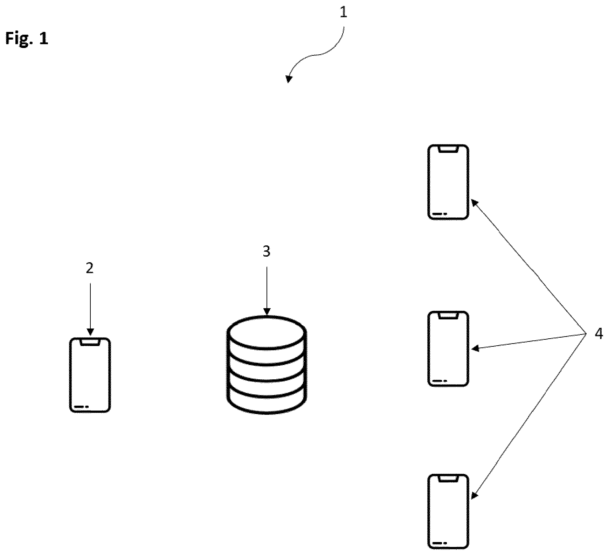

   [Fig. 1] représente schématiquement un exemple d'architecture de communication dans lequel un procédé d'envoi d'un flux de données audio d'un terminal participant à une session de conférence à destination d'un serveur de session peut être mis en oeuvre.
**Fig. 2**

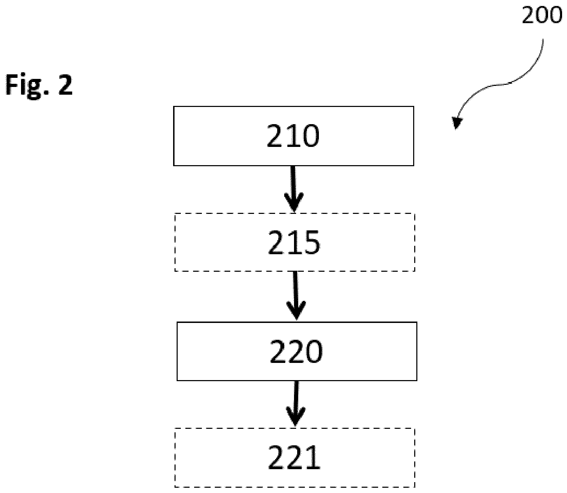

   [Fig. 2] représente un exemple de procédé d'envoi d'un flux audio d'un terminal participant à une session de conférence à destination d'un serveur de session.
**Fig. 3**

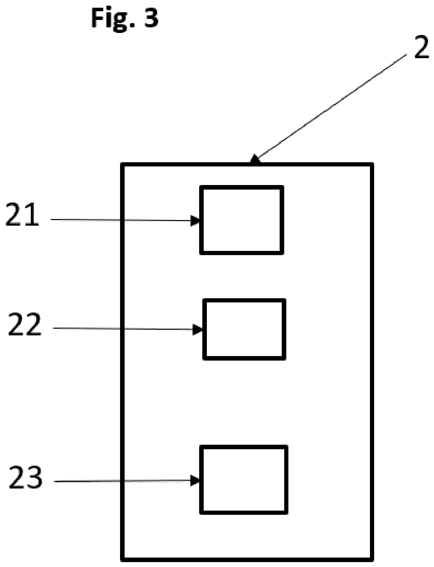

   [Fig. 3] représente un exemple de terminal.

### Description des modes de réalisation

Il est maintenant décrit en référence à la figure 1 un exemple d'architecture de communication 1 dans lequel un procédé d'envoi d'un flux de données audio d'un terminal participant à une session de conférence à destination d'un serveur de session peut être mis en oeuvre.

Un flux de données, ou un flux, est défini dans la présente divulgation comme correspondant à au moins deux paquets de données acquis successivement. Un flux de données audio, ou flux audio, est donc défini comme correspondant à au moins deux paquets de données audio acquis successivement.

L'architecture de communication 1 comprend un terminal 2, un serveur de session 3, et une pluralité de terminaux tiers 4. En l'occurrence, le terminal 2 et les terminaux tiers 4 participent à une session de conférence gérée au moins en partie par le serveur de session 3. Durant cette session de conférence, le terminal 2 et la pluralité de terminaux tiers 4 peuvent échanger, en quasi temps réel, des flux de données audios.

Ainsi, un flux de données émis par chacun du terminal 2 et des terminaux tiers 4 pendant la session de conférence est envoyé au serveur de session 3 qui distribue, en temps réel, le flux de données aux autres terminaux participant à la conférence. La distribution des paquets de données des flux de données entre le serveur de session et les terminaux participant à la session de conférence peut être directe ou indirecte. Une distribution est dite directe entre le serveur de session 3 et un terminal lorsque le serveur de session 3 envoie directement les paquets de données du flux de données à ce terminal. Une distribution est dite indirecte entre le serveur de session 3 et un terminal lorsque le serveur de session 3 envoie les paquets de données du flux de données à un dispositif intermédiaire, par exemple un autre serveur, avant que les paquets de données du flux de données ne soient envoyés au terminal.

Le terminal 2 est distingué, dans la présente divulgation, des terminaux tiers 4 dans la mesure où le procédé d'envoi d'un flux audio présenté en référence à la figure 2 est mis en oeuvre au niveau du terminal 2. Toutefois, le procédé présenté en référence à la figure 2 et mis en oeuvre par le terminal 2 peut également être mis en oeuvre par chacun des terminaux tiers 4 participant à la session de conférence.

La session de conférence peut ainsi désigner une audioconférence dans laquelle le terminal 2 et les terminaux tiers 4 peuvent être amenés à échanger, en temps réel, des flux audios par l'intermédiaire d'un serveur de session 3.

Dans des exemples, les terminaux de la session de conférence peuvent être amenés à échanger, en temps réel et en complément des flux de données audios, des flux de données vidéos. Dans ces exemples, la session de conférence peut donc désigner une visioconférence dans laquelle le terminal 2 et les terminaux tiers 4 peuvent être amenés à échanger, en temps réel, des flux audios et vidéos par l'intermédiaire d'un serveur de session.

Lors de la session de conférence, les paquets de données des flux de données émis par le terminal 2 et par les terminaux tiers 4 sont encapsulés selon un protocole internet. Ce protocole est notamment défini dans la norme RFC 791.

Dans l'exemple décrit ici, les flux de données échangés par le terminal 2 et les terminaux tiers 4 lors de la session de conférence sont encapsulés selon un protocole RTP (« Real-time Transport Protocol ») ou SRTP (« Secure Real-time Transport Protocol »).

Un flux de données encapsulé selon un protocole RTP doit être compris dans la présente demande comme un flux de données UDP (« User Datagram Protocol ») agencé de façon à respecter un protocole RTP, c'est-à-dire de façon à respecter un protocole notamment défini par la norme RFC 3550. En particulier, lorsqu'un flux de données RTP est chiffré de façon à respecter un protocole SRTP, c'est-à-dire conformément à la norme RFC 3711, on parle de flux de données SRTP.

Un flux audio émis par un terminal lors de la session de conférence est également encodé par un codec mis en oeuvre par le terminal.

Ainsi, lorsque le terminal 2 émet un flux audio lors de la session de conférence, les paquets de données de ce flux audio sont encapsulés selon un protocole internet, sont encodés par un codec, sont éventuellement chiffrés par une clé de chiffrement puis sont envoyés à destination du serveur de session 3 qui les distribue aux terminaux tiers 4 participant à la session de conférence.

Un terminal peut correspondre à un appareil de communication fixe ou mobile.

Un exemple de terminal 2 est notamment représenté en figure 3.

Dans des exemples et comme illustré par la figure 3, le terminal 2 peut comprendre un microphone 21 pour acquérir un flux audio. Il peut, en variante, être connecté à une caméra en tant que périphérique.

Dans des exemples et comme illustré par la figure 3, le terminal 2 peut comprendre une caméra 22 pour acquérir un flux vidéo. Il peut, en variante, être connecté à un microphone en tant que périphérique.

Dans des exemples, le terminal 2 peut comprendre un calculateur 23 configuré pour commander l'exécution des procédés présentés ici.

Comme expliqué précédemment, au moins l'un quelconque des terminaux tiers 4 participant à la session de conférence peut correspondre à l'exemple de terminal 2 décrit en référence à la figure 3. En ce sens, au moins l'un quelconque des terminaux tiers 4 peut comprendre un microphone 21, une caméra 22 et un calculateur 23.

Un serveur de session 3 peut par exemple correspondre à un serveur multimédia (connu sous la dénomination anglaise de « media server »).

Il est désormais présenté, en référence à la figure 2, un exemple de procédé 200 d'envoi d'un flux audio d'un terminal 2 participant à une session de conférence à laquelle participe en outre une pluralité de terminaux tiers 4. Le flux audio du terminal 2 est envoyé à destination du serveur de session 3. Le procédé d'envoi du flux de données audio du terminal 2 à destination du serveur de session 3 est mis en oeuvre par le terminal 2. Un des objectifs de la présente divulgation est de réduire les ressources de calcul nécessaires au serveur de session 3 dans la gestion de la session de conférence à laquelle participent le terminal 2 et les terminaux tiers 4.

Comme illustré par le bloc 210, le procédé 200 comprend :
- déterminer au moins un paramètre audio du flux audio acquis par ledit terminal.

Dans des exemples, l'un au moins du au moins un paramètre audio correspond à la valeur d'un volume sonore du flux audio acquis par le terminal.

Dans des exemples, l'un au moins du au moins un paramètre audio correspond à une fréquence du flux audio acquis par ledit terminal.

Comme illustré par le bloc 220, le procédé 200 comprend :
- envoyer ou ne pas envoyer le flux audio au serveur de session en fonction d'une valeur de l'au moins un paramètre audio.

Le procédé selon la présente divulgation permet de réduire le nombre de flux audios reçus et donc traités par le serveur de session 3 durant la session de conférence en n'envoyant pas certains des flux audios acquis par le terminal 2. En effet, dans le cadre d'une session de conférence en temps réel faisant intervenir une pluralité de terminaux, chacun des terminaux peut émettre un flux audio dans un même intervalle de temps. Par conséquent, transmettre aux participants chacun des flux audios émis par les terminaux dans un même intervalle de temps pourrait altérer la qualité sonore de la session de conférence. Dans ces conditions, le serveur de session 3 peut filtrer et sélectionner seulement certains des flux audios qu'il reçoit afin de les distribuer aux participants de la session de conférence en fonction de paramètres audios liés à ces flux audios, par exemple en fonction d'un volume sonore des flux audios. Habituellement, pour déterminer des paramètres audios de flux audio reçus, un serveur de session doit décoder chacun des flux audios, doit éventuellement déchiffrer au préalable ces flux lorsqu'il s'agit de flux audios chiffrés, afin de déterminer les paramètres audios qui lui permettent d'effectuer un traitement en fonction desdits paramètres. Dès lors, ne pas envoyer un flux audio au serveur de session permet d'économiser au moins une opération de décodage et une opération de détermination des paramètres audios, et permet éventuellement d'économiser une opération de déchiffrage au serveur de session 3 lorsque les communications sont chiffrées. Le procédé selon la présente divulgation permet donc d'économiser des ressources de calcul du serveur de session en utilisant astucieusement les ressources de calcul du terminal 2 pour opérer une discrimination des flux audios en amont, avant qu'ils soient transmis au serveur de session.

Dans des exemples dans lesquels l'un au moins du au moins un paramètre audio correspond à un volume sonore du flux audio, le flux audio est envoyé au serveur de session seulement lorsque le volume sonore du flux audio acquis est supérieur à un seuil de volume sonore déterminé. Ces exemples permettent d'éviter au serveur de session 3 de réceptionner et traiter des flux audios pour lesquels le volume sonore est inférieur au seuil de volume sonore déterminé. Un volume sonore peut, par exemple, correspondre à un volume sonore moyen d'un nombre prédéterminé de paquets audios appartenant au flux audio. Dès lors qu'il s'agit d'une conférence en temps réel, il convient de réduire au maximum la latence entre l'acquisition du flux audio par le terminal 2 et son envoi au serveur de session 3. Un compromis est donc effectué entre une détermination précise du volume sonore du flux audio et un délai dans la transmission de ce flux audio le cas échéant. Le flux audio peut donc être temporairement stocké au niveau du terminal 2 pour déterminer son volume sonore avant d'être envoyé au serveur de session si son volume sonore était déterminé comme supérieur au seuil de volume sonore.

Dans des exemples, et comme illustré par le bloc 215, le procédé peut également comprendre :
- recevoir une valeur de volume sonore depuis le serveur de session.
Dans ces exemples, le seuil de volume sonore en dessous duquel le flux audio du terminal 2 n'est pas envoyé au serveur de session 3 est déterminé comme étant égal à la valeur du volume sonore reçu du serveur de session 3.

Dans des modes de réalisation, le serveur de session 3 peut déterminer, en temps réel et en fonction des flux audios distribués aux participants à la session de conférence, un volume sonore en dessous duquel les nouveaux flux audios reçus ne seront pas traités. Par exemple, le serveur de session 3 peut être configuré pour distribuer aux participants à la session de conférence un nombre maximum prédéterminé de flux audios simultanés. Dans un tel cas, la sélection des flux à transmettre peut être effectuée en privilégiant les flux audios présentant les volumes les plus élevés parmi ceux reçus. Le serveur de session 3 peut envoyer au terminal 2 une valeur de volume sonore correspondant au volume sonore du flux audio le plus faible parmi les flux audios distribués. De cette façon, seul un flux audio présentant un volume sonore suffisant pour être distribué sera envoyé par le terminal 2 au serveur de session 3. Les flux audios présentant un volume inférieur sont filtrés par le terminal émetteur lui-même plutôt que par le serveur de session 3.

Dans des exemples dans lesquels le flux audio est envoyé par le terminal 2 au serveur de session 3, et comme illustré par le bloc 221, le procédé 200 peut également comprendre :
- transmettre une valeur du volume sonore du flux audio envoyé au serveur de session 3.
Ces exemples permettent au serveur de session 3 d'avoir accès au volume sonore du flux audio envoyé par le terminal 2 sans décoder le flux audio lui-même, et sans éventuellement le déchiffrer lorsque ce flux audio était chiffré. Notamment, lorsque le serveur de session 3 distribue uniquement un nombre prédéterminé de flux audios correspondant aux flux audios présentant les volumes les plus élevés parmi les flux audios qu'il reçoit, il n'est plus nécessaire pour le serveur de session 3 de décoder, éventuellement déchiffrer, ce flux audio pour pouvoir déterminer son volume sonore et donc pour pouvoir déterminer si ce flux audio doit être distribué ou non.

Dans des exemples dans lesquels l'un au moins du au moins un paramètre audio correspond à une fréquence du flux audio acquis par le terminal 2, le flux audio est envoyé au serveur de session 3 seulement lorsque le flux audio contient une fréquence comprise dans une plage de fréquences prédéterminée. Ainsi, lorsque le terminal 2 acquiert des flux audios qui ne comprennent pas de fréquence appartenant à la plage de fréquences prédéterminée, ces flux audios ne sont pas envoyés au serveur de session 3. Ils sont filtrés par le terminal 2.

Dans des exemples, la plage de fréquences prédéterminée peut correspondre à une plage de fréquences de la voix humaine. Ainsi, lorsqu'un flux audio acquis par le terminal 2 ne contient pas de fréquence appartenant à une plage de fréquences de la voie humaine, le flux audio acquis par le terminal 2 n'est pas envoyé au serveur de session 3. Cela permet d'éviter d'envoyer des flux audios au serveur de session 3 comprenant uniquement du bruit parasite acquis accidentellement par le terminal 2.

Dans des exemples, la plage de fréquences prédéterminée peut par exemple correspondre à une première plage de fréquences s'étendant de 30 à 3000 Hz ou à une deuxième plage de fréquences s'étendant de 60 à 500 Hz. La première plage de fréquences comprend l'ensemble des fréquences de la voix humaine, notamment celle des sopranos et des altos lorsqu'ils chantent. La deuxième plage de fréquences couvre l'ensemble des fréquences de la voix humaine lorsqu'elle est parlée mais pas nécessairement lorsqu'elle est chantée.

La présente divulgation présente également un terminal configuré pour mettre en oeuvre l'un quelconque des procédés présentés par la présente divulgation.

Le procédé selon la présente divulgation permet donc d'économiser des ressources de calcul du serveur de session 3 assurant la distribution des flux de données de la session de conférence en utilisant astucieusement les ressources de calcul du terminal 2 pour opérer une discrimination des flux audios en amont des échanges de données entre terminal et serveur. De cette façon, le serveur de session 3 n'a pas à décoder, éventuellement déchiffrer, l'ensemble des flux audios acquis par les terminaux en temps réel. Le filtrage, c'est-à-dire la sélection des flux, est mis en oeuvre au moins en partie au niveau des terminaux émetteurs.

## Revendications

1. Procédé, mis en oeuvre par un terminal, d'envoi d'un flux audio depuis ledit terminal participant à une session de conférence à laquelle participe en outre une pluralité de terminaux tiers ;
dans lequel les paquets de données des flux audios émis par ledit terminal et lesdits terminaux tiers sont encapsulés selon un protocole internet, et dans lequel un flux audio émis par chacun dudit terminal et desdits terminaux tiers est envoyé à un serveur de session qui distribue le flux audio aux autres terminaux participant à la conférence,
le procédé comprenant :
déterminer (210) au moins un paramètre audio du flux audio acquis par ledit terminal,
envoyer (220) ou ne pas envoyer le flux audio au serveur de session en fonction d'une valeur de l'au moins un paramètre audio.

2. Procédé selon la revendication précédente, dans lequel l'un au moins du au moins un paramètre audio correspond à un volume sonore du flux audio acquis par le terminal, et dans lequel le flux audio est envoyé au serveur de session seulement lorsque le volume sonore du flux audio acquis est supérieur à un seuil de volume sonore déterminé.

3. Procédé selon la revendication 2 dans lequel, lorsque le flux audio est envoyé au serveur de session, le procédé comprend en outre :
- transmettre (221) une valeur du volume sonore du flux audio.

4. Procédé selon la revendication 2 ou 3, dans lequel le procédé comprend en outre :
recevoir (215) une valeur du volume sonore du flux audio reçu du serveur de session,
et dans lequel le seuil de volume sonore est déterminé comme étant égal à la valeur du volume sonore reçu du serveur de session.

5. Procédé selon l'une des revendications précédentes, dans lequel l'un au moins du au moins un paramètre audio correspond à une fréquence du flux audio acquis par ledit terminal, et dans lequel le flux audio est envoyé au serveur de session seulement lorsque le flux audio contient une fréquence comprise dans une plage de fréquences prédéterminée.

6. Procédé selon la revendication 5, dans lequel la plage de fréquences prédéterminée correspond à une plage de fréquences de la voix humaine.

7. Procédé selon la revendication 4 ou 5, dans lequel la plage de fréquences prédéterminée s'étend de 30 à 3000 Hz.

8. Terminal configuré pour mettre en oeuvre l'un quelconque des procédés selon l'une des revendications 1 à 7.

9. Terminal selon la revendication précédente, dans lequel le terminal correspond à un téléphone mobile ou à un ordinateur.

10. Produit programme d'ordinateur comportant des instructions pour la mise en oeuvre du procédé selon l'une des revendications 1 à 7 lorsque ce programme est exécuté par un processeur.
